# EUROPEAN PATENT APPLICATION

(11) **EP 4 603 730 A1**
(43) Date of publication of application: **20.08.2025**
(21) Application number: 23877133.1
(22) Date of filing: 26.09.2023
(51) Int. Cl.: F16K 5/06, F16K 31/04

(54) **ELECTRICALLY OPERATED VALVE**

(30) Priority: 14.10.2022 JP 2022165202
(71) Applicant: Fujikoki Corporation, Tokyo 158-0082 (JP)
(72) Inventor: HAYAKAWA, Junya, Tokyo 158-0082 (JP)
(74) Representative: Ter Meer Steinmeister & Partner
(86) International application number: PCT/JP2023/034803
(87) International publication number: WO 2024/080127

(57) **Abstract**

An electrically operated valve includes a valve main body which has a valve chamber, a valve body which has a flow passage space in an inner part thereof and switches a fluid flow passage by being rotationally driven within the valve chamber, and a transmission mechanism which has a valve body drive shaft transmitting drive force for rotating the valve body to the valve body. The valve main body includes first, second and third flow passage holes which respectively communicate with the flow passage space to flow the fluid into the flow passage space, communicate with the flow passage space at a first rotational displacement position of the valve body, and communicate with the flow passage space at a second rotational displacement position of the valve body. An axis of rotation of the valve body and an axis of rotation of the valve body drive shaft cross each other.

## Description

### TECHNICAL FIELD

The present invention relates to an electrically operated valve, and more particularly relates to a ball valve which can switch a flow passage on the basis of a rotational position of a valve body.

### BACKGROUND ART

In a refrigeration cycle apparatus such as a car air conditioner, a ball valve may be provided for switching a flow passage of a refrigerant. The ball valve is characterized in that a pressure loss is less and an operation time is short.

Further, in the refrigeration cycle apparatus as mentioned above, a cartridge type switching valve may be used. This can allow a switching valve (a valve main body) to be assembled in the refrigeration cycle apparatus only by inserting the switching valve into a valve mounting hole of a housing provided with an inflow passage and an outflow passage for the refrigerant in such a manner as to a cartridge.

According to the cartridge type valve, in a case where a product is provided for a manufacturer of the refrigeration cycle apparatus in which a manufacturer of the switching valve is a customer, the switching valve can be assembled in the refrigeration cycle apparatus to a finished product with a simple operation of only inserting the switching valve into the housing, as long as various specifications such as an outer size of the valve main body, positions of respective flow passage holes and the like are previously shared with both the valve manufacturer and the customer, and the housing is previously produced in the customer side as a part of the refrigeration cycle apparatus. Therefore, the customer can efficiently manufacture the refrigeration cycle apparatus. Further, even in a case where the switching valve is required to be exchanged at maintenance time, the exchanging work can be performed with the similar simple operation.

Further, the following patent literature 1 exists as a literature disclosing the ball valve.

### CITATION LIST

### PATENT LITERATURE

Patent Literature 1: U.S. Patent Application Publication No. 2021/0254728

### SUMMARY OF INVENTION

In the meantime, in the cartridge type valve, it is necessary to open flow passages (totally three flow passages including an inflow passage and two outflow passages connected to a valve in case of a three-way valve) to an inner portion of a valve mounting hole into which the valve main body is inserted, and form the flow passages which are independent from each other so as to prevent the flow passages from communicating with each other in a short-circuit manner, thereby connecting to each of flow passage ports formed on an outer surface of the valve main body.

However, the valve body is transversely rotated in the conventional ball valve. Thus, the inflow passage is arranged, for example, on a bottom surface of the valve mounting hole, and can be sealed by setting a seal material (for example, O-ring) on an outer peripheral surface of the valve main body. However, two outflow passages switched by the rotation of the valve body have to be arranged around the transversely rotating valve body, that is, at different positions in a peripheral direction at the same height from the bottom surface of the inner peripheral surface of the valve mounting hole. It is not easy to seal these two outflow passages in such a manner as to prevent from communicating with each other within the valve mounting hole. Accordingly, in the structure of the conventional ball valve, it was hard to realize the cartridge type switching valve.

Therefore, an object of the present invention is to provide a new structure for a ball valve and to achieve a cartridge type ball valve (electrically operated valve).

In order to solve the problem and achieve the object, the electrically operated valve according to the present invention is an electrically operated valve including a valve main body which has a valve chamber in an inner part thereof, a valve body which has a flow passage space in an inner part thereof and switches a flow passage for fluid by being rotationally driven within the valve chamber, and a transmission mechanism which has a valve body drive shaft transmitting a drive force for rotating the valve body to the valve body, in which the valve main body has a first flow passage hole which communicates with the flow passage space to flow the fluid into the flow passage space, a second flow passage hole which is changed a communication state with the flow passage space by a rotational displacement position of the valve body and communicates with the flow passage space at a first rotational displacement position of the valve body, and a third flow passage hole which is changed a communication state with the flow passage space by the rotational displacement position of the valve body and communicates with the flow passage space at a second rotational displacement position of the valve body, wherein an axis of rotation of the valve body and an axis of rotation of the valve body drive shaft cross each other.

Typically, the above term "first flow passage hole" is an inflow hole which flows the fluid into the flow passage space, and the above terms "second flow passage hole" and "third flow passage hole" are both outflow holes which flow the fluid out of the flow passage space.

However, the electrically operated valve according to the present invention can be used for flowing the fluid in an opposite direction (this use example is called as "second use mode") to that in the typical use example (this use example is called as "first use mode"). In this second use mode, the above term "first flow passage hole" comes to an outflow hole which flows the fluid out of the flow passage space, and the above terms "second flow passage hole" and "third flow passage hole" both come to inflow holes which flow the fluid into the flow passage space.

In the electrically operated valve according to the present invention, as is different from the conventional ball valve in which the valve body transversely rotates (the valve body rotates around an axis of rotation of a shaft driving the valve body), the valve body is rotated in a vertical direction, that is, around an axis line which crosses (is typically orthogonal to) an axis of rotation of the valve body drive shaft. Therefore, in the present invention, it is not necessary to arrange the second flow passage hole (the first outflow hole) and the third flow passage hole (the second outflow hole) at the same height (the same position with respect to an up-and-down direction, that is, an axial direction of the valve main body or an extending direction of the valve body drive shaft) in conformity to a plane of rotation of the valve body as is different from the conventional one, but the second flow passage hole and the third flow passage hole can be arranged in such a manner as to be divided into an upper position and a lower position from the axis of rotation of the valve body. Therefore, according to the present invention, the cartridge type ball valve which can be mounted to the housing can be constructed, for example, as follows.

The first flow passage hole is formed in such a manner as to align a height position (a position in the up-and-down direction) with the axis of rotation of the valve body, the second flow passage hole (more accurately, an opening in an outer surface side of the valve main body in the second flow passage hole, a second outer opening mentioned later) is arranged at a lower position than the first flow passage hole (more accurately, an opening in the outer surface side of the valve main body in the first flow passage hole, a first outer opening mentioned later), and the third flow passage hole (more accurately, an opening in the outer surface side of the valve main body in the third flow passage hole, a third outer opening mentioned later) is arranged in an upper position than the first flow passage hole, respectively. Further, by arranging a seal material extending over a whole periphery of the outer peripheral surface of the valve main body and interposed with respect to an inner peripheral surface of the valve mounting hole of the housing, between the first flow passage hole (the first outer opening) and the second flow passage hole (the second outer opening) with respect to the up-and-down direction, and between the first flow passage hole (the first outer opening) and the second flow passage hole (the third outer opening) with respect to the up-and-down direction, each of the flow passage holes (portions between each of the flow passages in the housing side connected thereto) can be shut off in a sealed state.

More specifically, according to the present invention, it is possible to arrange three outer openings (openings formed on the outer surface (the outer peripheral surface or the bottom surface) of the valve main body for connecting to the flow passage in the housing side) which are open to the valve mounting hole (the housing) at intervals in the up-and-down direction (in other words, the depth direction of the valve mounting hole or the axial direction of the valve main body). Therefore, each of the flow passages can be separated only by arranging the seal material between these outer openings. The seal material is interposed between the outer peripheral surface of the valve main body and the inner peripheral surface of the valve mounting hole. Thus, three layers of ring-shaped sealed spaces separated in the up-and-down direction are formed between the valve mounting hole and the valve main body inserted thereto, and the cartridge type ball valve can be accordingly realized by utilizing each of the spaces as an independent (in other words, mutually shut-off) flow passage, more specifically, using the sealed space in the intermediate part as the inflow passage, and using the sealed space in the lower part and the sealed space in the upper part as the outflow passages (the first outflow passage and the second outflow passage) respectively.

The arrangement structure according to the present invention as mentioned above can be realized as long as the axis of rotation of the valve body and the axis of rotation of the valve body drive shaft cross in place of being parallel in the conventional ball valve. Therefore, the axis of rotation of the valve body and the axis of rotation of the valve body drive shaft are not necessarily orthogonal such as an embodiment mentioned later.

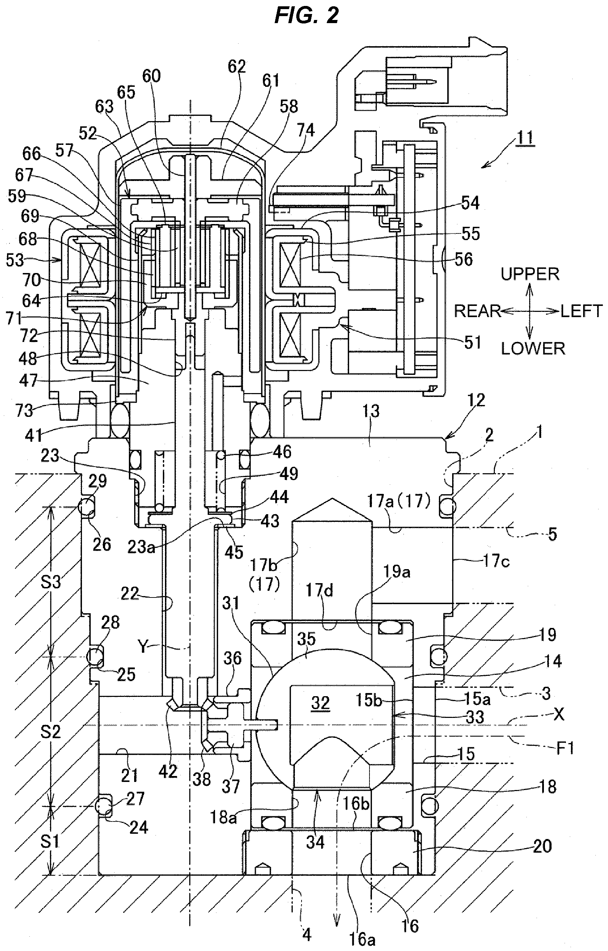

Further, the term "crossing" for the axis of rotation of the valve body and the axis of rotation of the valve body drive shaft does not necessarily mean crossing of both the axes of rotation in contact state, but the term "crossing" is a concept including a state in which both the axes of rotation are not contact, but cross. For example, a description will be given by taking Fig. 2 mentioned later as one example. In the electrically operated valve shown in Fig. 2, an axis of rotation X of the valve body and an axis of rotation Y of the valve body drive shaft cross in a contact state. However, "crossing" in the present invention does not only mean this state, but the concept of "crossing" includes, for example, a state in which the axis of rotation X of the valve body or the axis of rotation Y of the valve body drive shaft are out of alignment in an orthogonal direction to a plane of paper of Fig. 2 (near side or far side of the plane of paper), but cross as seen from the orthogonal direction to the plan of paper of Fig. 2 (both the axes of rotation cross without being contact). Deviating both the axes of rotation (crossing without being contact) as mentioned above can be achieved, for example, by using a helical gear in place of a bevel gear.

The electrically operated valve according to the present invention is typically provided with the following aspect (1), and can be provided with one or more of the following aspects (2) to (7).
(1) On the assumption that a parallel direction to the axial direction of the valve main body and the axis line of the valve main body is an up-and-down direction, one side of the up-and-down direction is upper, and the other side of the up-and-down direction is lower, the first flow passage hole has a first inner opening which is an end part opening in the valve chamber side, and a first outer opening which is an end part opening in an opposite side to the valve chamber, the first inner opening is formed in a side surface of the valve chamber, and the first outer opening is formed in an outer peripheral surface of the valve main body. Further, the second flow passage hole has a second inner opening which is an end part opening in the valve chamber side, and a second outer opening which is an end part opening in an opposite side to the valve chamber, the second inner opening is formed at a first position in a peripheral direction around an axis line of the first inner opening, and the second outer opening is formed at a lower position than the first outer opening. Further, the third flow passage hole has a third inner opening which is an end part opening in the valve chamber side, and a third outer opening which is an end part opening in an opposite side to the valve chamber, the third inner opening is formed at a second position in a peripheral direction around the axis line of the first inner opening, and the third outer opening is formed at an upper position than the first outer opening in the outer peripheral surface of the valve main body. Further, the axis of rotation of the valve body coincides with the axis line of the first inner opening.

The above term "opposite side to the valve chamber" means an outer surface (an outer peripheral surface or a bottom surface) side of the valve main body, and the outer openings (the first outer opening, the second outer opening and the third outer opening) corresponding to the end part openings in the opposite side to the valve chamber are outer flow passages, that is, openings which are formed on the outer surface of the valve main body for connecting to the flow passage port open to the inner surface (the inner peripheral surface or the bottom surface) of the valve mounting hole in the housing.

Further, the second outer opening is typically formed in the bottom surface of the valve main body such as an embodiment mentioned later, however, may be formed on the outer peripheral surface of the valve main body similarly to the other outer openings. Even in this case, the second outer opening is formed at a lower position than the first outer opening.

(2) The valve main body has on an outer peripheral surface thereof a first seal groove which is positioned between the first outer opening and the second outer opening with respect to the up-and-down direction, extends in such a manner as to surround the valve main body, and allows a seal material to be placed therein, and a second seal groove which is positioned between the first outer opening and the third outer opening with respect to the up-and-down direction, extends in such a manner as to surround the valve main body, and allows the seal material to be placed therein. A seal member, for example, an O-ring or the like is placed in the first seal groove and the second seal groove.

(3) The valve body has a first opening part, a second opening part and a shell wall part. Here, the first opening part communicates the first flow passage hole and the flow passage space to be opposite to the first inner opening. Further, the second opening part communicates the second flow passage hole and the flow passage space when being opposite to the second inner opening in association with the rotation of the valve body, and communicates the third flow passage hole and the flow passage space when being opposite to the third inner opening. Further, the shell wall part closes the second inner opening when the second opening part is not opposite to the second inner opening in association with the rotation of the valve body, and closes the third inner opening when the second opening part is not opposite to the third inner opening.

In the aspect (3) mentioned above, there is a case where the other member (for example, a valve seat member in an embodiment mentioned later) is interposed between the valve body, and the second flow passage hole and the third flow passage hole. Therefore, the shell wall part is not limited to such a structure as to directly close the second inner opening and the third inner opening, but may has such a structure as to indirectly close them, for example, such a structure that the second flow passage hole and the third flow passage hole are closed by closing valve ports (a lower side valve port and an upper side valve port) of the valve seat member such as the embodiment mentioned later.

(4) The transmission mechanism further has a valve body driven shaft (which may be hereinafter, referred simply to as "driven shaft") which extends in an axial direction of the first inner opening, and rotates around an axis line of the first inner opening by application of a drive force transmitted from the valve body drive shaft (which may be hereinafter, referred simply to as "drive shaft") to transmit the rotation to the valve body, and an engagement means which transmits the rotation of the valve body drive shaft to the valve body driven shaft. Further, the driven shaft has a base end part which is fixed to a side part shell wall in an opposite side to the first opening part of the valve body in such a manner as to be capable of transmitting the drive force transmitted from the drive shaft to the valve body, and a leading end part which extends in an opposite direction to the first opening part from the base end part and is exposed to the drive force from the drive shaft.

(5) In the aspect (4) mentioned above, the engagement means includes a driving side bevel gear which is provided in the drive shaft, and a driven side bevel gear which is provided in the driven shaft and engages with the driving side bevel gear. In this case, it is preferable to set the number of teeth of the driven side bevel gear more than the number of teeth of the driving side bevel gear. It is for allowing even a driving apparatus having a small output to securely drive the valve body. Further, it becomes accordingly possible to downsize the electrically operated valve (the driving apparatus).

(6) A stopper mechanism stopping the rotation of the valve body at a predetermined rotational position is provided. The stopper mechanism has a stopper piece part which protrudes outward from the axis of rotation of the driven shaft and rotates together with the driven shaft, a first contact part which comes into contact with the stopper piece part when the valve body rotates to a first rotational displacement position and stops the valve body via the driven shaft, and a second contact part which comes into contact with the stopper piece part when the valve body rotates to the second rotational displacement position and stops the valve body via the driven shaft. According to this aspect, it is possible to securely stop the valve body at the fixed positions (the first rotational displacement position and the second rotational displacement position) to switch the flow passage.

(7) In an electrically operated valve capable of being mounted to a housing by being inserted to a valve mounting hole of the housing, the housing including the valve mounting hole, a first flow passage which has a first flow passage having an end part opening in an inner peripheral surface of the valve mounting hole, a second flow passage which has an end part opening at a lower position than the end part opening of the first flow passage in the inner peripheral surface of the valve mounting hole or a bottom surface of the valve mounting hole, and a third flow passage which has an end part opening at an upper position than the end part opening of the first flow passage in the inner peripheral surface of the valve mounting hole, the first flow passage hole communicates with the first flow passage of the housing, the second flow passage hole communicates with the second flow passage of the housing, and the third flow passage hole communicates with the third flow passage of the housing, when the valve main body is inserted into the valve mounting hole.

According to the present invention, a cartridge type ball valve (electrically operated valve) can be realized.

The other objects, features and advantages of the present invention are apparent from the following description of embodiments according to the present invention which is given on the basis of the accompanying drawings. It is apparent for a person skilled in the art that the present invention is not limited to the following embodiments, but can be variously changed within the scope of the invention described in claims. Further, in each of the drawings, same reference numerals denote the same or corresponding portions.

### BRIEF DESCRIPTION OF DRAWINGS

Fig. 1 is a perspective view showing an electrically operated valve according to an embodiment of the present invention.
Fig. 2 is a vertical cross sectional view showing the electrically operated valve (in a first switch state) according to the embodiment.
Fig. 3 is a vertical cross sectional view showing the electrically operated valve (in a second switch state) according to the embodiment.
Fig. 4 is a perspective view showing a vertical cross section of a lower part of a valve main body by cutting the electrically operated valve (in the first switch state) according to the embodiment.
Fig. 5 is a perspective view showing a vertical cross section of the lower part of the valve main body by cutting the electrically operated valve (in the second switch state) according to the embodiment.
Fig. 6 is a perspective view showing a driven shaft and a bearing member (in the first switch state) provided in the electrically operated valve according to the embodiment.
Fig. 7 is a perspective view showing the driven shaft and the bearing member (in the second switch state) provided in the electrically operated valve according to the embodiment.
Fig. 8 is a front elevational view showing the bearing member provided in the electrically operated valve according to the embodiment.
Fig. 9 is a side elevational view showing the bearing member provided in the electrically operated valve according to the embodiment.
Fig. 10 is a vertical cross sectional view (a cross section as seen from an arrow A-A in Fig. 8) showing the bearing member provided in the electrically operated valve according to the embodiment.
Fig. 11 is a front elevational view showing a driven shaft provided in the electrically operated valve according to the embodiment.
Fig. 12 is a side elevational view showing the driven shaft provided in the electrically operated valve according to the embodiment.
Fig. 13 is a plan view showing the driven shaft provided in the electrically operated valve according to the embodiment.
Fig. 14 is a front elevational view showing the driven shaft and the bearing member (in the first switch state) provided in the electrically operated valve according to the embodiment.
Fig. 15 is a vertical cross sectional view (a cross section as seen from an arrow B-B in Fig. 14) showing the driven shaft and the bearing member provided in the electrically operated valve according to the embodiment.

### DESCRIPTION OF EMBODIMENTS

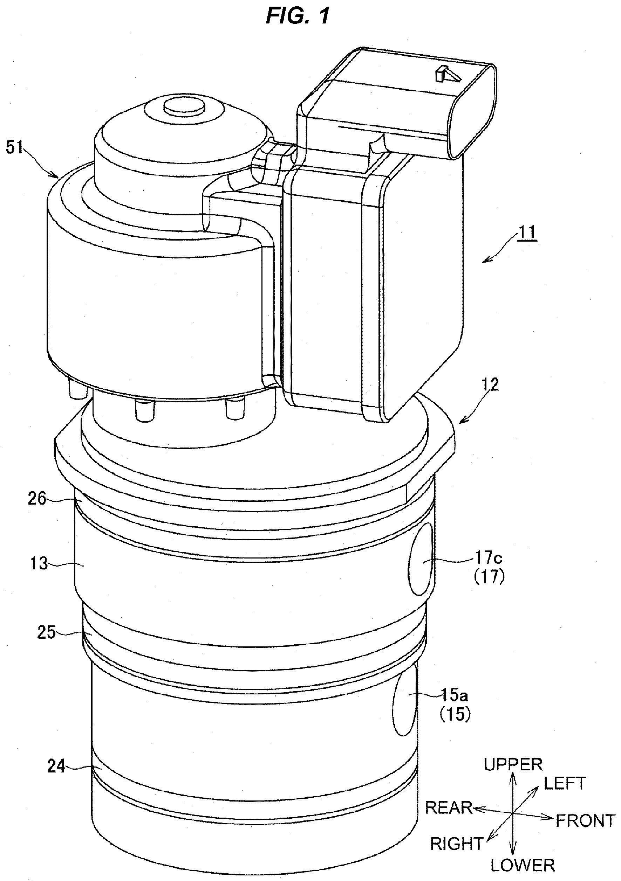

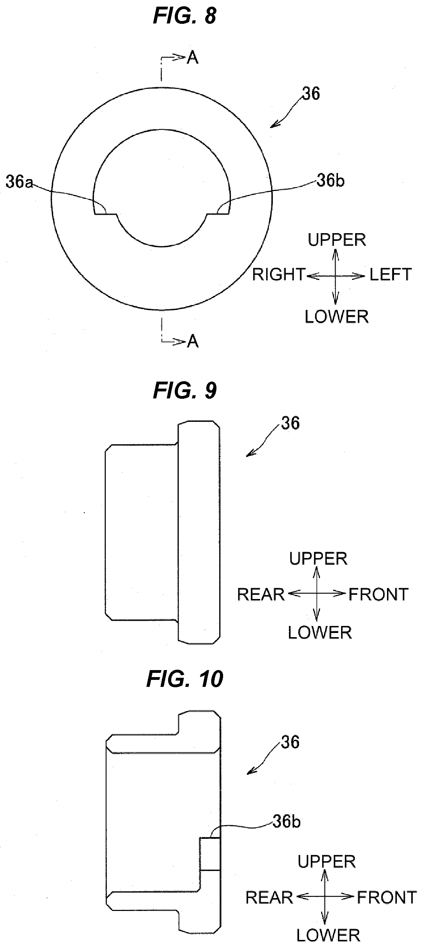

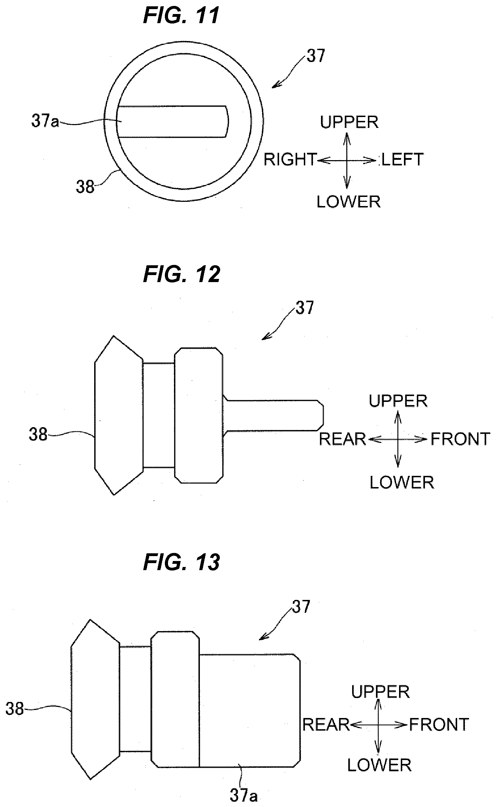

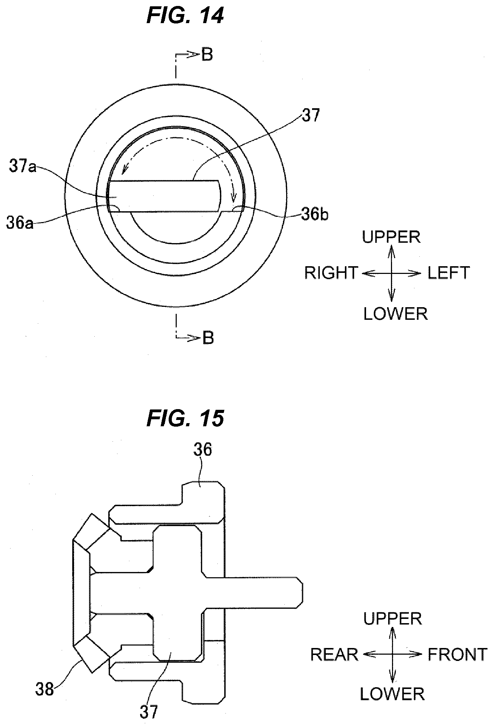

A description will be given of an electrically operated valve according to an embodiment of the present invention with reference to Figs. 1 to 14. Each of the drawings appropriately shows two-dimensional coordinates or three-dimensional coordinates which represent an up-and-down direction, a front-back direction and a lateral direction and are orthogonal to each other, and the following description will be given on the basis of these directions. However, the electrically operated valve according to the present invention and the present embodiment can be used in various directions, each of the directions are provided for convenience, and structures of respective parts of the present invention are not limited by these directions. Further, axial directions of a valve main body, a valve chamber and a valve drive shaft coincide with the up-and-down direction. Further, the terms "vertical" and "horizontal" may be used, a vertical direction coincides with the up-and-down direction, and a direction orthogonal to the vertical direction is a horizontal direction including the lateral direction and the front-back direction.

As shown in Figs. 1 to 14, an electrically operated valve 11 according to an embodiment of the present invention is a so-called cartridge type three-way ball valve (hereinafter, refer to as "ball valve") which is assembled in a refrigeration cycle apparatus, for example, a heat pump type heating and cooling system by being mounted to a housing 1 (shown only in Fig. 2) disposed in the refrigeration cycle apparatus and switches a flow passage for refrigerant.

The housing 1 is provided with a valve mounting hole 2 which can mount a ball valve as shown in Fig. 2, an inflow passage (corresponding to "first flow passage" in the present invention) 3 which is open to an inner peripheral surface of the valve mounting hole 2 and flows the refrigerant into a ball valve 11, a first outflow passage (corresponding to "second flow passage" in the present invention) 4 which is open to a bottom surface of the valve mounting hole 2 and flows the refrigerant out of the ball valve 11, and a second outflow passage (corresponding to "third flow passage" in the present invention) 5 which is open to an upper position than the inflow passage 3 in the inner peripheral surface of the valve mounting hole 2 and flows the refrigerant out of the ball valve 11.

A method of fixing in such a manner as to prevent the ball valve 11 from moving out of the valve mounting hole 2 is not particularly restricted, but can be achieved, for example, by forming a female screw in the inner peripheral surface of the valve mounting hole 2, forming a male screw engaging with the female screw on an outer peripheral surface of a ball valve 11 (a valve main body 13 mentioned later), and screwing the ball valve 11 into the valve mounting hole 2 while engaging the female screw and the male screw.

On the contrary, the ball valve 11 mounted to the housing 1 has a valve part 12 which switches the flow passage for the refrigerant, a driving apparatus 51 which drives the valve part 12, a speed reduction mechanism 71 which reduces the speed of the rotation of the driving apparatus 51, and a drive shaft (a valve body drive shaft) 41 which transmits the rotation speed reduced by the speed reduction mechanism 71 to the valve part 12.

The valve part 12 has a cylindrical valve main body 13 which has a valve chamber 14 in an inner part thereof and is inserted into the valve mounting hole 2 of the housing 1, a spherical valve body 31 which has a flow passage space 32 in an inner part thereof and is rotatably supported within the valve chamber 14, a driven shaft 37 which is exposed to a rotational drive force transmitted by the drive shaft 41 and transmits the rotational drive force to the valve body 31, a bearing member 36 which rotatably supports the driven shaft 37, a stopper mechanism (a stopper piece part 37a, a first contact part 36a and a second contact part 36b mentioned later) which stops the rotation of the valve body 31 at a predetermined position via the driven shaft 37, valve seat members 18 and 19 which clamp the valve body 31 from upper and lower sides in a slidably rotatable manner, a lower lid 20 which closes a lower surface of the valve chamber 14, and a guide member 47 which rotatably supports the drive shaft 41.

The valve seat members are constructed by a lower side valve seat member 18 which is arranged in a bottom surface of the valve chamber 14, and an upper side valve seat member 19 which is arranged in a top surface (a ceiling surface) of the valve chamber 14. Each of the valve seat members 18 and 19 is a resin member made of Teflon (registered trademark). Further, in order to allow outflow holes (a first outflow hole 16 and a second outflow hole 17) mentioned later to communicate with the flow passage space, the respective valve seat members 18 and 19 are provided in center part thereof with through holes 18a and 19a passing through in the up-and-down direction in a piercing manner, and a valve seat on which the valve body 31 rotates while being in contact is formed in the valve body 31 side (a side closer to a center part of the valve chamber 14) of the through holes 18a and 19a. The through hole 18a pierced in the lower side valve seat member 18 is called as "lower side valve port", and the through hole 19a pieced in the upper side valve seat member 19 is called as "upper side valve port" respectively. The upper side valve seat member 19, the valve body 31 and the lower side valve seat member 18 are supported within the valve chamber 14 by the lower lid 20 which is screwed into from the bottom surface part of the valve chamber 14.

The valve main body 13 has an inflow hole (corresponding to "first flow passage hole" in the present invention) 15 which communicates the inflow passage 3 of the housing 1 and the valve chamber 14 (the flow passage space 32) and allows the refrigerant to flow into an inner part (the flow passage space 32) of the valve body 31, a first outflow hole (corresponding to "second flow passage hole" in the present invention) 16 which communicates the first outflow passage 4 of the housing 1 and the valve chamber 14 (the flow passage space 32) and allows the refrigerant to flow out of the valve chamber 14 (the flow passage space 32) to the first outflow passage 4, and a second outflow hole (corresponding to "third flow passage hole" in the present invention) 17 which communicates the second outflow passage 5 of the housing 1 and the valve chamber 14 (the flow passage space 32) and allows the refrigerant to flow out of the valve chamber 14 (the flow passage space 32) to the second outflow passage 5.

Here, the inflow hole 15 horizontally passes through a peripheral wall in a front side of the valve main body 13. Further, an axis line X of the inflow hole 15 horizontally extending in the front-back direction coincides with an axis of rotation of the driven shaft 37, and the valve body 31 rotates around the axis line X of the inflow hole 15. A working man-hour can be reduced by coinciding the axis line X with the axis of rotation of the driven shaft 37, however, a layout in which these axes do not coincide can be employed.

The first outflow hole 16 is constructed by a lower lid through hole which passes through the lower lid 20 in the up-and-down direction consecutively to the lower side valve port 18a. The first outflow hole (the lower lid through hole) 16 is formed in such a manner as to be open to the bottom surface of the valve main body 13. Therefore, the opening (the second outer opening 16a) is positioned below a first outer opening 15a which is an end part in an outer peripheral surface side of the valve main body of the inflow hole 15.

The second outflow hole 17 is constructed by a vertical hole part 17b which is pierced in such a manner as to extend vertically upward an inner part of the valve main body 13 consecutively to the upper side valve port 19a, and a horizontal hole part 17a which extends horizontally forward in such a manner as to bend vertically from an upper end part of the vertical hole part 17b and is open to the outer peripheral surface of the valve main body 13. A third outer opening 17c which is an end part in an outer peripheral surface side of the valve main body of the second outflow hole 17 (the horizontal hole part 17a) is positioned above the first outer opening 15a which is the end part in the outer peripheral surface side of the valve main body of the inflow hole 15. In the drawing, a first inner opening, a second inner opening and a third inner opening corresponding to end parts in a valve chamber side of the inflow hole 15, the first outflow hole 16 and the second outflow hole 17 are denoted by reference symbols 15b, 16b and 17d, respectively.

Three seal grooves 24, 25 and 26 are formed in the outer peripheral surface of the valve main body 14, the seal grooves extending over a whole periphery of the valve main body 13 in such a manner as to horizontally surround the valve main body 13. In formed position (positions in the up-and-down direction, the same applies hereinafter) of the respective seal grooves, the first seal groove 24 is formed between the first outer opening 15a of the inflow hole 15 and the second outer opening 16a of the first outflow hole 16. The second seal groove 25 is formed between the first outer opening 15a of the inflow hole 15 and the third outer opening 17c of the second outflow hole 17. The third seal groove 26 is formed at an upper position than the third outer opening 17c of the second outflow hole 17.

Further, the respective grooves 24, 25 and 26 are provided with seal materials (O-rings in the present embodiment) 27, 28 and 29, and each of the seal materials 27, 28 and 29 is adapted to be interposed between the outer peripheral surface of the valve main body 13 and the inner peripheral surface of the valve mounting hole 2 when the valve main body 13 is inserted into the valve mounting hole 2. Thus, three layers of ring-shaped seal spaces S1, S2 and S3 (refer to Fig. 2) separated in the up-and-down direction can be formed in an inner part of the valve mounting hole 2. Each of the sealed spaces S1, S2 and S3 performs a function for shutting off a connection part between each of the flow passage holes 15, 16 and 17 of the ball valve 11 and each of the flow passages 3, 4 and 5 of the housing 1 to prevent any short-circuit flow from being generated between the flow passages.

More specifically, the first outflow passage 4 and the first outflow hole 16 (the second outer opening 16a) connected thereto are arranged in the sealed space S1 in the bottom layer, the second outflow passage 5 and the second outflow hole 17 (the third outer opening 17c) connected thereto are arranged in the sealed space S3 in the top layer, the inflow passage 3 and the inflow hole 15 (the first outer opening 15a) connected thereto are arranged in the sealed space S2 in the intermediate layer, and these connection parts are arranged in the mutually independent sealed spaces, respectively. Therefore, it is possible to prevent the short-circuit flow from being generated between the flow passages.

The valve body 31 has a shell wall part 35 which comes to an outer shell covering the flow passage space 32, and two opening parts (a first opening part 33 and a second opening part 34) which are pieced in such a manner as to pass through the shell wall part 35. The first opening part 33 always faces (directly faces) the inflow hole 15 regardless of a rotating state (a rotational displacement position) of the valve body 31. Therefore, the flow passage space 32 in the inner part of the valve body and the inflow hole 15 (therefore, the inflow passage 3 also) communicate with each other through the first opening part 33 at any rotational displacement position of the valve body 31.

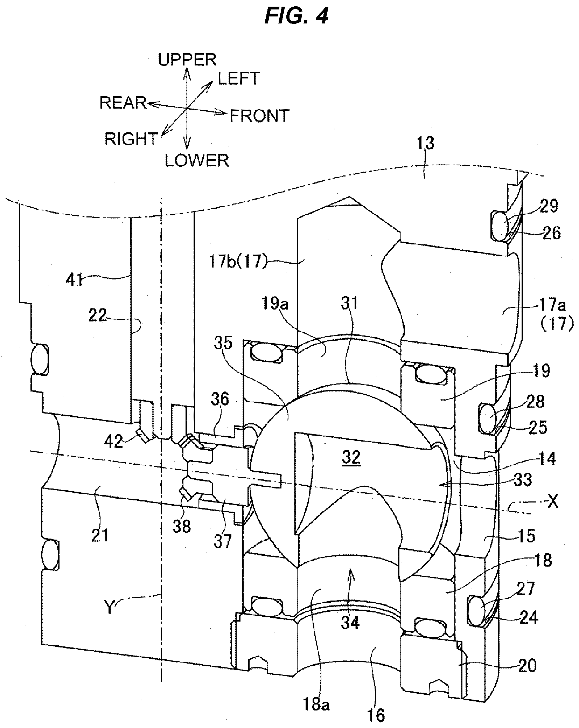

On the contrary, the second opening part 34 is formed around a horizontal axis line X (which is the axis of rotation of the valve body 31 and coincides with the axis line X of the inflow hole 15) extending in the front-back direction, and a communication state changes due to the rotating state of the valve body 31. More specifically, when the valve body 31 rotates and the second opening part 34 is directed vertically downward, the second opening part 34 faces (directly faces) the lower side valve port 18a, and the flow passage space 32 and the first outflow hole 16 communicate (a state in Figs. 2 and 4, this state is called as "first switch state"). At this time, the upper side valve port 19a is closed by the shell wall part 35 of the valve body 31.

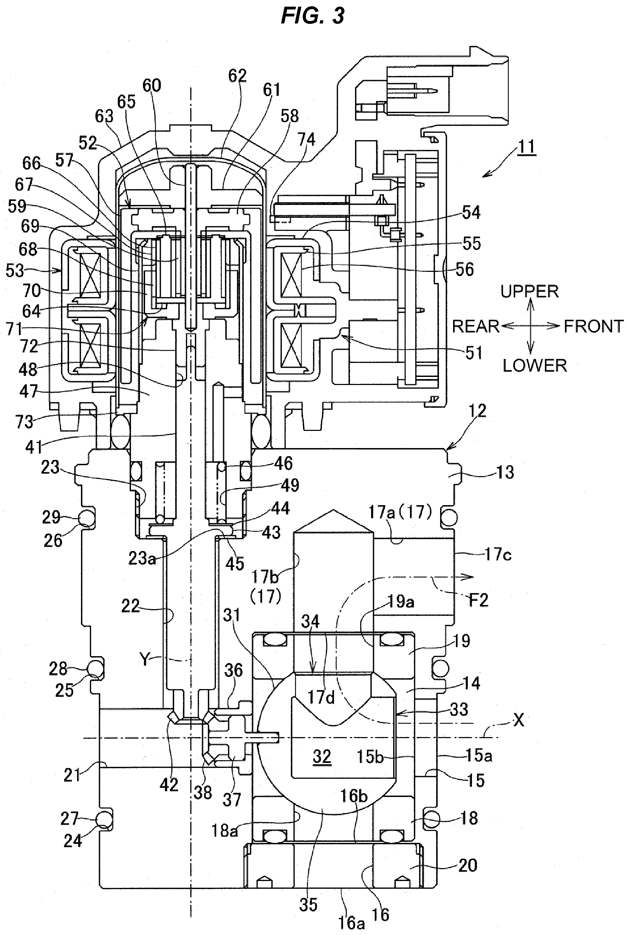

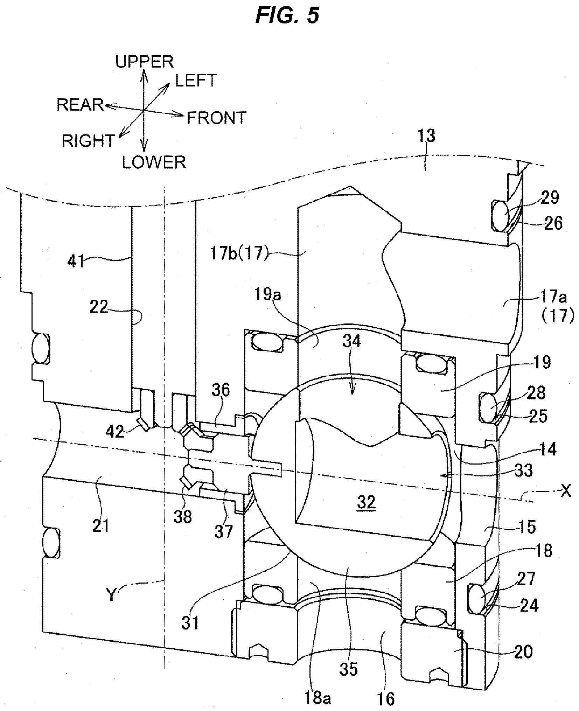

Further, when the valve body 31 and the second opening part 34 is directed vertically upward, the second opening part 34 faces (directly faces) the upper side valve port 19a, and the flow passage space 32 and the second outflow hole 17 communicate (a state in Figs. 3 and 5, this state is called as "second switch state"). At this time, the lower side valve port 18a is closed by the shell wall part 35 of the valve body 31. By rotating the valve body 31 at 180 degrees as mentioned above, it is possible to switch the flow passage, that is, switch to the state (the first switch state) in which the refrigerant flowing into the flow passage space 32 from the inflow hole 15 is flowed out of the first flow passage hole 16, or the state (the second switch state) in which the refrigerant is flowed out of the second flow passage 17.

Further, in the ball valve 11 according to the present embodiment (same applies to the present invention), it is possible not only to simply switch the flow passage as mentioned above, but also to shut off both the flow passages (a full-close state) and regulate the flow rate. The full-close state can be achieved by rotating the valve body 31, for example, at 90 degrees from the first switch state as shown in Figs. 2 and 4. In this rotating state, both the first outflow hole 16 (the lower side valve port 18a) and the second outflow hole 17 (the upper side valve port 19a) are closed by the shell wall part 35, and the ball valve 11 comes to the full-close state.

Further, on the assumption that a state in which the second opening part 34 directly faces the outflow hole (the first outflow hole 16 or the second outflow hole 17) is a full-open state, and a state in which the outflow holes 16 and 17 are closed by the shell wall part 35 is a full-close state, a cross sectional area of the flow passage is increased and a passing flow rate of the refrigerant is increased when the overlapping between the second opening part 34 and the outflow holes 16 and 17 (the lower side valve port 18a or the upper side valve port 19a) is enlarged, and the cross sectional area of the flow passage is reduced and the passing flow rate of the refrigerant is reduced when the overlapping becomes small, in an intermediate state between the full-open state and the full-close state. Therefore, the passing flow rate of the refrigerant can be regulated, for example, stopping the valve body 31 in a state in which the valve body 31 is rotated at an optional angle such as 15 degrees or 30 degrees from the first switch state shown in Figs. 2 and 4.

The ball valve 11 according to the present embodiment is provided with a Hall element 74 which detects an angle of rotation of a rotor 52 (mentioned later) included in the driving apparatus 51, can detect the rotational displacement position (angle of rotation) of the valve body 31 by detecting the angle of rotation of the rotor 52, and can control opening and closing of the valve and control the flow rate of the valve as mentioned above. Further, the motion and the function of the valve body 31 as mentioned above can be realized as long as a shape around the horizontal axis line X of the valve body 31 is circular. Therefore, the valve body 31 is not necessarily formed into a complete spherical shape, but may be formed into "spherical shape". The term "spherical" includes a prolate spheroid (spheroid) and a cylindrical shape.

The driven shaft 37 transmitting the drive force for rotating the valve body 31 to the valve body 31 is arranged in an outer side at the back of the valve body 31. More specifically, the driven shaft 37 horizontally extends in a direction of the axis line X of the inflow hole 15, and is rotatably supported by a bearing member 36 which is placed in an inner part of a driven shaft arrangement hole 21 pierced in such a manner as to extend horizontally rearward from a side surface in a rear side of the valve chamber 14. Further, the driven shaft 37 is fixed in a base end part (a front end part) thereof to the shell wall part 35 in the rear side of the valve body 31, and is provided with a bevel gear (a driven side bevel gear) 38 in a leading end part (a rear end part) thereof. The driven side bevel gear 38 is configured to engage with a driving side bevel gear 42 mentioned later to receive the drive force from the driving apparatus 51.

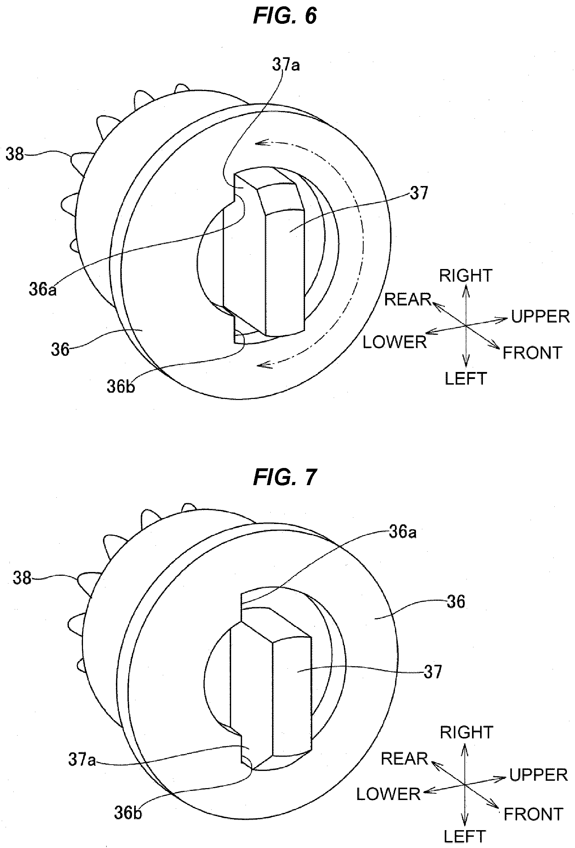

Further, the stopper mechanism is provided in an intermediate part of the driven shaft 37. The stopper mechanism is constructed by a stopper piece part 37a which protrudes outward in a diametrical direction of the driven shaft 37, and two contact parts (a first contact part 36a and a second contact part 36b) which are provided in the bearing member 36 and come into contact with the stopper piece part 37a in the following manner in association with the rotation of the valve body 31, as shown in Figs. 6 to 15.

The valve body 31 rotates together with the driven shaft 37 by the application of the rotation of the driven shaft 37, however, the stopper piece part 37a of the driven shaft 37 comes into contact with the first contact part 36a of the bearing member 36 when the second opening part 34 is directed vertically downward, so that the rotation of the driven shaft 37 is stopped. Thus, the rotation of the valve body 31 is also stopped. On the contrary, when the valve body 31 is rotated at 180 degrees until the second opening part 34 is directed vertically upward from this state, the stopper piece part 37a of the driven shaft 37 comes into contact with the second contact part 36b of the bearing member 36. Thus, the rotation of the driven shaft 37 and the valve body 31 is stopped.

The valve body drive shaft 41 is provided in such a manner as to vertically extend in the up-and-down direction at the rear of the valve chamber 14. More specifically, a drive shaft arrangement hole 22 is pieced in an upper part in the rear side of the valve main body 13, the drive shaft arrangement hole 22 extending vertically downward from the upper surface of the valve main body 13 and communicating with the driven shaft arrangement hole 21. The drive shaft arrangement hole 22 has an enlarged diameter part 23 having an enlarged diameter in an upper end part thereof, and is fixed by screwing a lower part of the guide member 47 into the enlarged diameter part 23. Further, a bottom surface of the enlarged diameter part 23 forms a step part 23a expanding horizontally.

The guide member 47 is a cylindrical member extending up and down, has a center hole 48 passing through in a length direction (an up-and-down direction), and rotatably supports the drive shaft 41 by fitting and inserting the upper part of the drive shaft 41 into the center hole 48. Further, an output shaft 72 (mentioned later) of the driving apparatus 51 is inserted into an upper end part of the center hole 48 of the guide member 47, and the output shaft 72 and the drive shaft 41 are connected in an inner part of the center hole 48.

The drive shaft 41 is arranged in such a manner that an axis of rotation Y thereof is orthogonal to the axis of rotation of the driven shaft 37 and the valve body 31 and the axis line X of the inflow hole 15. The axis of rotation Y of the drive shaft coincides with the axis of rotation of the rotor in the driving apparatus. Further, the drive shaft 41 is provided in a lower end thereof with a bevel gear (a driving side bevel gear) 42 which engages with the driven side bevel gear 38 disposed in the driven shaft 37 and transmits the rotational drive force of the driving apparatus 51 to the driven shaft 37. In the number of teeth of each of the bevel gears, the number of teeth of the driven side bevel gear 38 is desirably set to be larger than the number of teeth of the driving side bevel gear 42. This is because the valve body 31 can be securely rotated and driven even by the driving apparatus 51 having a comparatively small output.

Further, the drive shaft 41 has in an intermediate part thereof a discoid flange part 43 which protrudes horizontally outward. The flange part 43 performs a function for preventing the drive shaft 41 from displacing (moving) in the up-and-down direction.

More specifically, an enlarged diameter part 49 having an enlarged diameter is formed in a lower part of the center hole 48 of the guide member 47, and a coil spring 46 is disposed in the enlarged diameter part 49 of the center hole 48. The coil spring 46 is a compression coil spring which is arranged in a compressed state between a ceiling surface of the enlarged diameter part 49 of the center hole 48 and the flange part 43, and biases downward in such a manner as to press the flange part 43 against the step part 23a of the drive shaft arrangement hole 22. Thus, it is possible to prevent the drive shaft 41 from being displaced in the up-and-down direction. In order to allow the drive shaft 41 to smoothly rotate, washers 44 and 45 are respectively interposed between the coil spring 46 and the flange part 43, and between the flange part 43 and the step part 23a.

The driving apparatus 51 and the speed reduction mechanism 71 are not particularly limited to a particular type or structure as long as they can rotate the drive shaft 41, but one example will be mentioned below.

In the present embodiment, a stepping motor is used as the driving apparatus 51. Therefore, a can (a sealed container) 62 forming a sealed space is disposed in an upper surface part of the guide member 47. The can 62 is a cylindrical member which is covered and not bottomed (is opened in a bottom surface and is closed in a top surface), and is fixed to an outer peripheral surface of the guide member 47 via a ring-shaped base member 73.

The stepping motor 51 is constructed by a stator 53 which is placed in an outer side (an outer periphery) of the can 62, and a rotor 52 which is rotatably placed in an inner side (an inner periphery) of the can 62.

The stator 53 includes a yoke 54, a coil 56 which is formed by winding a winding wire to a bobbin 55, and a resin molded cover 63 which covers the yoke 54 and the coil 56. On the contrary, the rotor 52 is constructed by integrally connecting a cylindrical rotor member 57 which is made by a magnetic material, and a sun gear member 58 which is made by a resin material. A support shaft 60 is inserted into a center part of the sun gear member 58, and an upper part of the support shaft 60 is supported by a support member 61 which is arranged in an inner side of a top part of the can 62.

A sun gear 59 of the sun gear member 58 engages with a plurality of planetary gears 66 which are rotatably supported to a shaft 65 provided in a carrier 64 mounted on a bottom surface of an output gear 70. An upper part of the planetary gear 66 engages with an annular ring gear (an internal fixed gear) 67 which is attached to an upper part of a cylindrical member 69 fixed to an upper part of the guide member 47, and a lower part of the planetary gear 66 engages with an internal tooth gear 68 of the annular output gear 70. The number of teeth of the ring gear 67 is set to be slightly different from the number of teeth of the internal tooth gear 68. Thus, the number of rotation of the sun gear 59 is decelerated with a great deceleration ratio and is transmitted to the output gear 70. The gear mechanisms (the sun gear 59, the planetary gear 66, the ring gear 67 and the output gear 70) construct the speed reduction mechanism (the paradox planetary gear speed reduction mechanism) 71 which decelerates the rotation of the driving apparatus 51 mentioned above.

The output shaft 72 transmitting the rotation of the output gear 70 to the drive shaft 41 is connected to a center part in a bottom surface of the output gear 70. The output shaft 72 is rotatably supported by fitting and inserting the support shaft 60 to an upper end part thereof and fitting and inserting a lower part thereof to the center hole 48 of the guide member 47, and is connected to the drive shaft 41 in an inner part of the center hole 48 of the guide member 47.

A description will be given of a motion of the ball valve 11 according to the present embodiment as follows.

In the first switch state shown in Figs. 2 and 4, the second opening part 34 of the valve body 31 directly faces the first outflow hole 16 (the lower side valve port 18a), and the refrigerant flowing into the valve chamber 14 from the inflow passage 3 through the inflow hole 15 flows out to the first outflow passage 4 from the first outflow hole 16 through the flow passage space 32 in the inner part of the valve body and the second opening part 34 of the valve body 31 (refer to an arrow F1 in Fig. 2). Further, at this time, the second outflow hole 17 (the upper side valve port 19a) is closed by the shell wall part 35 of the valve body 31. Further, the stopper piece part 37a of the driven shaft 37 comes into contact with the first contact part 36a of the bearing member 36.

When an electric current is supplied to the stator 53 (the coil 56) in such a manner that the rotor 52 rotates in one direction (a direction that the stopper piece part 37a rotates toward the second contact part 36b) from the first switch state, the rotation of the rotor 52 is decelerated by the speed reduction mechanism 71, and is thereafter transmitted to the drive shaft 41 via the output shaft 72, and the drive shaft 41 rotates. Further, the rotation is transmitted to the driven shaft 37 via the driving side bevel gear 42 and the driven side bevel gear 38, and the valve body 31 rotates around the horizontal axis line X by the rotation of the driven shaft 37. When the valve body rotates at 180 degrees, the second opening part 34 of the valve body 31 directly faces the second outflow hole 17 (the upper side valve port 19a), so that the flow passage space 32 in the inner part of the valve body and the second outflow hole 17 communicate, and the first outflow hole 16 (the lower side valve port 18a) is closed by the shell wall part 35 of the valve body 31 (the second switch state). Thus, the refrigerant flowing into the valve chamber 14 from the inflow passage 3 through the inflow hole 15 flows out to the second outflow passage 5 from the second outflow hole 17 through the flow passage space 32 and the second opening part 34 of the valve body 31 (refer to an arrow F2 in Fig. 3). At this time, the stopper piece part 37a of the driven shaft 37 comes into contact with the second contact part 36b of the bearing member 36.

The flow passage can be switched between the first switch state and the second switch state as mentioned above. As already mentioned, it is not only possible to simply switch the flow passage, but also possible to shut off the flow passage by stopping the valve body 31 in the middle (for example, in the state of rotating at 90 degrees) (close both the first outflow hole 16 and the second outflow hole 17 to the valve closed state), and regulate the flow rate of the refrigerant flowing out of each of the outflow holes 16 and 17 by changing the facing degree (the overlapping degree) of the second opening part 34 of the valve body 31 and the lower side valve port 18a (or the upper side valve port 19a).

Further, in the description of the embodiment, the case that the embodiment is used in the first use mode which is a typical use example is described. However, the electrically operated valve 11 can be used in a second use mode which is an inverse flow thereto. In a case where the electrically operated valve 11 is used in this second use mode, the first outflow hole 16 and the second outflow hole 17 come to the inflow hole for flowing the refrigerant into the flow passage space 32, and the inflow hole 15 comes to the outflow hole for flowing the refrigerant out of the flow passage space 32.

### REFERENCE SIGNS LIST

F1, F2 flow of refrigerant
X axis line of inflow hole (axis or rotation of valve body and valve body driven shaft)
Y axis of rotation of valve body drive shaft
S1, S2, S3 sealed space
1 housing
2 valve mounting hole
3 inflow passage (first flow passage)
4 first outflow passage (second flow passage)
5 second outflow passage (third flow passage)
11 ball valve (electrically operated valve)
12 valve part
13 valve main body
14 valve chamber
15 inflow hole (first flow passage hole)
15a first outer opening
15b first inner opening
16 first outflow hole (lower lid through hole) (second flow passage hole)
16a second outer opening
16b second inner opening
17 second outflow hole (third flow passage hole)
17a horizontal hole part
17b vertical hole part
17c third outer opening
17d third inner opening
18 lower side valve seat member
18a lower side valve port (through hole of lower side valve seat member)
19 upper side valve seat member
19a upper side valve port (through hole of upper side valve seat member)
20 lower lid
21 driven shaft arrangement hole
22 drive shaft arrangement hole
23 enlarged diameter part
23a step part
24 first seal groove
25 second seal groove
26 third seal groove
27, 28, 29 seal material (O-ring)
31 valve body
32 flow passage space
33 first opening part
34 second opening part
35 shell wall part
36 bearing member
36a first contact part
36b second contact part
37 valve body driven shaft
37a stopper piece part
38 driven side bevel gear
41 valve body drive shaft
42 driving side bevel gear
43 flange part
44, 45 washer
46 coil spring
47 guide member
48 center hole
49 enlarged diameter part
51 driving apparatus (stepping motor)
52 rotor
53 stator
54 yoke
55 bobbin
56 coil
57 rotor member
58 sun gear member
59 sun gear
60 support shaft
61 support member
62 can
63 resin molded cover
64 carrier
65 shaft
66 planetary gear
67 ring gear (internal fixed gear)
68 internal tooth gear
69 cylindrical member
70 output gear
71 speed reduction mechanism (paradox planetary gear speed reduction mechanism)
72 output shaft
73 base plate
74 Hall element

## Claims

1. An electrically operated valve comprising:
a valve main body which has a valve chamber in an inner part thereof;
a valve body which has a flow passage space in an inner part thereof and switches a flow passage for fluid by being rotationally driven within the valve chamber; and
a transmission mechanism which has a valve body drive shaft transmitting a drive force for rotating the valve body to the valve body, and
the valve main body comprising:
a first flow passage hole which communicates with the flow passage space to flow the fluid into the flow passage space;
a second flow passage hole which is changed a communication state with the flow passage space by a rotational displacement position of the valve body and communicates with the flow passage space at a first rotational displacement position of the valve body; and
a third flow passage hole which is changed a communication state with the flow passage space by the rotational displacement position of the valve body and communicates with the flow passage space at a second rotational displacement position of the valve body,
wherein an axis of rotation of the valve body and an axis of rotation of the valve body drive shaft cross each other.

2. The electrically operated valve according to claim 1, wherein on the assumption that a parallel direction to the axial direction of the valve main body and the axis line of the valve main body is an up-and-down direction, one side of the up-and-down direction is upper, and the other side of the up-and-down direction is lower, the first flow passage hole comprises:
a first inner opening which is an end part opening in the valve chamber side; and
a first outer opening which is an end part opening in an opposite side to the valve chamber,
wherein the first inner opening is formed in a side surface of the valve chamber,
wherein the first outer opening is formed in an outer peripheral surface of the valve main body,
wherein the second flow passage hole comprises:
a second inner opening which is an end part opening in the valve chamber side; and
a second outer opening which is an end part opening in an opposite side to the valve chamber,
wherein the second inner opening is formed at a first position in a peripheral direction around an axis line of the first inner opening,
wherein the second outer opening is formed at a lower position than the first outer opening,
wherein the third flow passage hole comprises:
a third inner opening which is an end part opening in the valve chamber side; and
a third outer opening which is an end part opening in an opposite side to the valve chamber,
wherein the third inner opening is formed at a second position in a peripheral direction around the axis line of the first inner opening,
wherein the third outer opening is formed at an upper position than the first outer opening in the outer peripheral surface of the valve main body, and
wherein the axis of rotation of the valve body coincides with the axis line of the first inner opening.

3. The electrically operated valve according to claim 2, wherein the valve main body comprises on an outer peripheral surface thereof:
a first seal groove which is positioned between the first outer opening and the second outer opening with respect to the up-and-down direction, extends in such a manner as to surround the valve main body, and allows a seal material to be placed therein; and
a second seal groove which is positioned between the first outer opening and the third outer opening with respect to the up-and-down direction, extends in such a manner as to surround the valve main body, and allows the seal material to be placed therein.

4. The electrically operated valve according to claim 2, wherein the valve body comprises:
a first opening part which communicates the first flow passage hole and the flow passage space to be opposite to the first inner opening;
a second opening part which communicates the second flow passage hole and the flow passage space when being opposite to the second inner opening in association with the rotation of the valve body, and communicates the third flow passage hole and the flow passage space when being opposite to the third inner opening; and
a shell wall part which closes the second inner opening when the second opening part is not opposite to the second inner opening in association with the rotation of the valve body, and closes the third inner opening when the second opening part is not opposite to the third inner opening.

5. The electrically operated valve according to claim 2, wherein the transmission mechanism further comprises:
a valve body driven shaft which extends in an axial direction of the first inner opening, and rotates around an axis line of the first inner opening by application of a drive force transmitted from the valve body drive shaft to transmit the rotation to the valve body; and
an engagement means which transmits the rotation of the valve body drive shaft to the valve body driven shaft, and
wherein the valve body driven shaft comprises:
a base end part which is fixed to a side part shell wall in an opposite side to the first opening part of the valve body in such a manner as to be capable of transmitting the drive force transmitted from the valve body drive shaft to the valve body; and
a leading end part which extends in an opposite direction to the first opening part from the base end part and is exposed to the drive force from the valve body drive shaft.

6. The electrically operated valve according to claim 5, wherein the engagement means comprises:
a driving side bevel gear which is provided in the valve body drive shaft; and
a driven side bevel gear which is provided in the valve body driven shaft and engages with the driving side bevel gear.

7. The electrically operated valve according to claim 6, wherein the number of teeth of the driven side bevel gear is more than the number of teeth of the driving side bevel gear.

8. The electrically operated valve according to claim 5, further comprising a stopper mechanism which stops the rotation of the valve body at a predetermined rotational position,
wherein the stopper mechanism comprises:
a stopper piece part which protrudes outward from the axis of rotation of the valve body driven shaft and rotates together with the valve body driven shaft;
a first contact part which comes into contact with the stopper piece part when the valve body rotates to a first rotational displacement position and stops the valve body via the valve body driven shaft; and
a second contact part which comes into contact with the stopper piece part when the valve body rotates to the second rotational displacement position and stops the valve body via the valve body driven shaft.

9. The electrically operated valve according to any one of claims 2 to 8, wherein the electrically operated valve is capable of being mounted to a housing by being inserted to a valve mounting hole of the housing,
the housing comprising:
the valve mounting hole;
a first flow passage which has an end part opening in an inner peripheral surface of the valve mounting hole;
a second flow passage which has an end part opening at a lower position than the end part opening of the first flow passage in the inner peripheral surface of the valve mounting hole or a bottom surface of the valve mounting hole; and
a third flow passage which has an end part opening at an upper position than the end part opening of the first flow passage in the inner peripheral surface of the valve mounting hole, and
wherein the first flow passage hole communicates with the first flow passage of the housing, the second flow passage hole communicates with the second flow passage of the housing, and the third flow passage hole communicates with the third flow passage of the housing, when the valve main body is inserted into the valve mounting hole.
